(19) Europäisches Patentamt
European Patent Office
Office européen des brevets

(11) **EP 3 014 861 B1**

(12) **EUROPEAN PATENT SPECIFICATION**

(45) Date of publication and mention
of the grant of the patent:
**22.08.2018 Bulletin 2018/34**

(21) Application number: **13734694.6**

(22) Date of filing: **25.06.2013**

(51) Int Cl.:
*H04M 3/30* (2006.01)  *H04B 3/46* (2015.01)
*H04M 3/34* (2006.01)

(86) International application number:
**PCT/EP2013/063264**

(87) International publication number:
**WO 2014/206449 (31.12.2014 Gazette 2014/53)**

(54) **METHOD FOR DETECTING A NOISE INDUCED BY A POWERLINE SYSTEM ON A TWISTED PAIR CABLE**

VERFAHREN ZUR ERKENNUNG VON RAUSCHEN DURCH EIN STROMLEITUNGSSYSTEM AUF EINEM VERDRILLTEN KABELPAAR

PROCÉDÉ DE DÉTECTION D'UN BRUIT CAUSÉ PAR UN SYSTÈME D'ALIMENTATION SUR UN CÂBLE À PAIRE TORSADÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**04.05.2016 Bulletin 2016/18**

(73) Proprietor: **Telecom Italia S.p.A.**
**20123 Milano (IT)**

(72) Inventors:
• **BERGAGLIO, Andrea**
**I-10148 Torino (IT)**
• **EULA, Umberto**
**I-10148 Torino (IT)**
• **GNAZZO, Angelantonio**
**I-10148 Torino (IT)**
• **MAFRICI, Antonio**
**I-00166 Roma (IT)**

• **PALMA, Mauro**
**I-10148 Torino (IT)**
• **PITTONI, Fabrizio**
**I-10127 Torino (IT)**

(74) Representative: **Colombo, Stefano Paolo et al**
**Marchi & Partners S.r.l.**
**Via Vittor Pisani, 13**
**20124 Milano (IT)**

(56) References cited:
**EP-A1- 2 383 899    JP-A- 2006 304 027**

• **AKIYAMA Y ET AL: "Influence of a PLC signal induced i.nto the modem on the communication performance of VDSL", ELECTROMAGNETIC COMPATIBILITY, 2003. EMC '03. 2003 IEEE INTERNATIONAL SYMPOSIUM ON ISTANBUL, TURKEY 11-16 MAY 2003, PISCATAWAY, NJ, USA,IEEE, vol. 1, 11 May 2003 (2003-05-11), pages 197-200, XP010795657, ISBN: 978-0-7803-7779-0**

**Description**

**Technical field**

The present invention relates to the field of telecommunication networks. In particular the present invention relates to a method for detecting a noise induced by a signal transmitted along an electric line (in particular, an electric line supporting the powerline communication, or PLC, technology) over a signal transmitted along a twisted pair cable (in particular, a twisted pair cable supporting the very high bit rate digital subscriber line 2, or VDSL2, technology) of a telecommunication network.

**Background art**

An access network typically connects a user's communication equipment with a station of a voice and/or data service provider in its turn connected to a backbone communication network. A traditional telephone access network, for instance, connects the user's telephone with the local telephone exchange.

In a wired access network, the link between the user's equipment at the user's premises (e.g. home, office, etc.) and the immediate service provider station is traditionally made up of twisted pair cables comprising copper wires. At the user's premises, usually, an integrated access device (IAD) provides the interface between the twisted pair cable supporting the access network and a home network, usually a wireless local network or an Ethernet local network, though which voice and/or data may be distributed to a plurality of user's communication devices (e.g. personal computer, printer, set-top box, etc.).

Emerging needs for high speed communications drive access network implementations towards solutions replacing all or part of the traditional cables with optical fibers. Several configurations for fiber deployment are typically used, e.g. FTTCab (Fiber To The Cabinet), FFTB (Fiber To The Building) and FFTH (Fiber To The Home), which differ on the basis of where the optical fiber is terminated.

In a FFTCab architecture, the optical fiber is terminated in a cabinet, which may be hundreds of meters away from the user's premises. Final link to the user's premises is a twisted pair cable. In a FFTB architecture, the optical fiber is terminated in the building (usually in the basement) where users' apartments or offices are located, and the final link to the users' premises is made by a twisted pair cable. In a FTTH architecture, fiber is terminated at the user's premises, such as in a box outside the user's office or home.

Among the access technologies supported by access networks are those belonging to the family of xDSL (Digital Subscriber Line) technologies. In particular, the VDSL2 (Very high bit rate Digital Subscriber Line 2) access technology is capable of transmitting data for broadband communications (e.g. triple play services such as voice, video, data) over a twisted pair cable, at a speed up to 250 Mb/s using a bandwidth up to 30 MHz. The technology is standardized in the International Telecommunication Union telecommunications sector (ITU-T) as Recommendation G.993.2. The standard defines a wide range of profiles that can be used in different access network architectures. For instance, a first profile indicated as "17a" is typically implemented for the final link reaching the user's premises in FTTCab architectures, this first profile using 4096 carriers with carrier bandwidth of 4.3125 kHz, and achieving an overall bandwidth of 17.664 MHz. A second profile indicated as "30a" is typically implemented for the final link reaching the user's premises in FTTB architectures, this second profile using 3479 carriers with carrier bandwidth of 8.625 kHz, and achieving an overall bandwidth of about 30 MHz. Moreover, other profiles, indicated as "8a", "8b, "8c" and "8d" achieve a bandwidth of nearly 8 MHz, while profiles indicated as "12a" and "12b" achieve a bandwidth of about 12 MHz.

In order to implement a xDSL technology, and in particular the VDSL2 technology, a DSLAM (Digital Subscriber Line Access Multiplexer) is typically installed between the service provider station and the user's premises, and a xDSL modem is typically installed at the user's premises. The DSLAM is installed at the point in which the optical fiber terminates (e.g. the cabinet or building in a FTTCab or FTTB architecture) and interfaces the optical fiber with the twisted pair cable that reaches the user's premises. The xDSL modem at the user's premises terminates the twisted pair cable. The DSLAM comprises a group of ports, each port connected to a user's xDSL modem, and, in the upstream direction, multiplexes multiple signals carrying users' data into one composite signal directed to the service provider station. In the downstream direction, the DSLAM demultiplexes the composite signal from the service provider station into a bundle of signals directed to a plurality of users' equipment.

Further, the DSLAM typically supports a set of test procedures called SELT (Single-Ended Loop Test), DELT (Dual-Ended Loop Test), MELT (Metallic Loop Test) that check performances of the link between the DSLAM and the xDSL modem and the xDSL channels over such link.

In particular, the DELT test procedure is performed by the DSLAM and the xDSL modem at the user's premises and provides for measuring the conditions of the link at both ends thereof, requiring therefore an active link between the end devices. Results of measurements are collected at the DSLAM. Amongst the parameters that can be measured by a DELT test procedure are:

- the QLN (Quiet Line Noise) per carrier, which is level of the noise present on the link per each carrier of the xDSL signal, in the absence of the xDSL signal; and
- the SNR (Signal to Noise Ratio) per carrier, which is the ratio between the received signal power and the received noise power per each carrier of the xDSL signal.

The aggregation of the QLN measurements for the different carriers of the xDSL signal represents the frequency spectrum of the noise present on the link within the bandwidth used by the xDSL signal. The aggregation of the SNR measurements for the different carriers of the xDSL signal represents the frequency spectrum of the signal-to-noise ratio over the bandwidth used by the xDSL signal.

As already described above, at the user's premises, a home network is usually deployed for distributing, among possible different user's devices (e.g. personal computer, printer, set-top box, etc.), the data coming from the access network via the integrated access device. As known, the PLC (PowerLine Communication) technology may be used for the home network. The PLC technology allows reusing the electric lines already used for the electric power distribution inside the user's premises as data transmission physical media between the user's devices connected to the electric power distribution network. Indeed, as applied for the home networking of a xDSL signal, the PLC technology provides for superimposing the modulated carriers of the xDSL signal over the low frequency AC current signal transported by the electric lines. Through the PLC technology, a data connection may be implemented between the integrated access device and any device connected to the electric power distribution network and provided with an Ethernet interface, such as a personal computer, a printer, a set-top box, etc. Data connection is performed by means of Ethernet/powerline adapters provided with Ethernet ports. For connecting the integrated access device to a personal computer, for instance, two adapters are plugged into respective electric current outlets and then one adapter is connected to the integrated access device and the other adapter to the personal computer.

The powerline communication technology is the subject of a series of specifications and standards. The former include the HomePlug AV specification that is provided by the HomePlug Alliance (December 2005), while the latter include the IEEE Standard 1901-2010, "IEEE Standard for Broadband over Power Line Networks: Medium Access Control and Physical Layer Specifications" and the standard CENELEC EN 50561-1.

As known, a VDSL2 signal over the twisted pair cable reaching the user's premises and a signal propagating along the lines for the energy distribution according to the PLC technology (indicated in the following as "powerline signal") have overlapping working bandwidths. Indeed, the bandwidths used by the VDSL2 and PLC technologies overlap within the frequency range from 1 MHz to 30 MHz.

Therefore, in case a line for the energy distribution carrying a powerline signal is installed in the proximity of a twisted pair cable carrying a VDSL2 signal, the powerline signal may interfere with the VDSL2 signal and induce a noise over the VDSL2 signal. This noise may degrade the performances of the link carrying the VDSL2 signal in terms of stability, and may lead to a link failure. Such a situation may occur inside the user's premises when both the twisted pair cable transporting the VDSL2 signal and the line transporting the powerline signal are present and they are located one near to the other, but also within a building comprising, e. g., the offices of different users. Indeed, along the vertical route of the conductors and cables in a multilevel building, the twisted pair cable transporting a VDSL2 signal and the line for the energy distribution transporting a powerline signal (which may be directed to the same user of the VDSL2 signal or to another user living/working inside the same building) may be laid down in close proximity and even inside the same duct.

WO 2010/105996 discloses a method for reducing interference between a power line carrier signal transmitted over a power line and a VDSL type signal transmitted over a telephone line located close to the power line. Said signals convey data in the form of bits that are attributed to carrier frequencies distributed in one frequency band according to different frequency planes. The invention is characterised in that it includes: a first step (1) for determining at least one carrier frequency, known as the VDSL frequency, of a frequency plane used for the transmission of the VDSL signal, for which the spectral power density is greater than a pre-determined threshold; a step (2) for determining at least one carrier frequency, known as the CPL frequency, of another frequency plane used for the transmission of the power line carrier signal and which is shared with at least one VDSL frequency thus determined; and a step (3) for reducing the number of bits hitherto attributed to each CPL frequency thus determined. Another example of prior art is represented by European patent publication EP2383899.

## Summary of the invention

WO 2010/105996 relates to a method for reducing the interference that a powerline signal may cause on a VDSL type signal. The method of WO 2010/105996 may be applied once it has been established that the noise superimposed on the VDSL type signal is caused by a powerline signal and not by another noise source.

In a real-life situation, when a user becomes aware of a performance deterioration over the link transporting the VDSL2 signal because it detects, e.g., a reduced data transfer speed from/to the Internet and/or multiple connection drops in a short time, she/he typically turns to a support service. An operator of such a support service, however, does not have any diagnostic tool for determining if the performance deterioration is due to a noise induced by a powerline signal, which, as described above, may be transported by an electric line laid down in the same apartment or office of the user, or by an electric line laid down within the same building but serving another user. Moreover, the operator usually does not have any knowledge about the possible presence of powerline systems, unless the user itself informs the operator that she/he is using a home network based on the PLC technology. But in this case, however, the user may not be aware of powerline systems of other users within the same building.

In view of the above, the inventors have addressed the problem of providing a method for detecting a noise induced by a signal transmitted along an electric line (in particular, an electric line supporting the PLC technology) over a signal transported along a twisted pair cable (in particular, a twisted pair cable supporting the VDSL2 technology) of a telecommunication network. In particular, the inventors have addressed the problem of providing a method for detecting a noise induced by a signal transported along an electric line over a signal transported along a twisted pair cable that may be performed by an operator of a support service upon receiving a report from a user about a performance deterioration over the twisted pair cable.

According to a first aspect, the present invention provides a method for detecting a noise induced by a first signal transmitted along an electric line over a second signal transmitted along a twisted pair cable, the first signal being a powerline signal, the method comprising:

a) acquiring a spectrum of a parameter indicative of an overall noise over said twisted pair cable, the spectrum comprising a spectrum of a quiet line noise over the twisted pair cable and/or a spectrum of a signal to noise ratio over the twisted pair cable;

b) checking whether the spectrum comprises at least one spectral feature at a frequency corresponding to that at which a power spectral density of the first signal presents a notch, the at least one spectral feature comprising at least one notch in the spectrum of the quiet line noise over the twisted pair cable and/or at least one peak in the spectrum of the signal to noise ratio over the twisted pair cable; and

c) in the affirmative, establishing that the second signal is affected by the noise induced by the signal.

Preferably, the second signal is a very high bit rate digital subscriber line 2, VDSL2, signal.

Preferably, step b) comprises retrieving from the spectrum a first number of samples of the parameter within a first frequency band between a first frequency and a second frequency, the frequency band comprising higher frequencies than a frequency of the at least one spectral feature.

According to embodiments of the present invention, the first frequency is equal to about 7.4 MHz and the second frequency is equal to about 7.6 MHz.

According to further embodiments, the first frequency is equal to about 14.5 MHz and the second frequency is equal to about 14.7 MHz.

Preferably, the first number of samples are spaced by a frequency interval equal to about 34.5 kHz.

Advantageously, step b) comprises retrieving from the spectrum a second number of samples of the parameter within a second frequency band between a third frequency and a fourth frequency, the second frequency band comprising frequencies that are substantially centered around the frequency of the at least one spectral feature.

According to embodiments of the present invention, the third frequency is equal to about 7 MHz and the fourth frequency is equal to about 7.2 MHz.

According to further embodiments, the third frequency is equal to about 14.1 MHz and the fourth frequency is equal to about 14.3 MHz.

Profitably, the second number of samples are spaced by a frequency interval equal to about 34.5 kHz.

Preferably, step b) comprises:

- computing a first average of the first number of samples;
- computing a second average of the second number of samples;
- computing a checking parameter on the basis of the first average and the second average; and
- checking whether the checking parameter is higher than a threshold.

According to a second aspect, the present invention provides a system for detecting a noise induced by a first signal transmitted along an electric line over a second signal transmitted along a twisted pair cable, the first signal being a powerline signal, the system comprising:

- an acquisition unit configured to acquire a spectrum of a parameter indicative of an overall noise over the twisted pair cable, the spectrum comprising a spectrum of a quiet line noise over the twisted pair cable and/or a spectrum of a signal to noise ratio over the twisted pair cable; and

- a processing unit configured to check whether the spectrum comprises at least one spectral feature at a frequency corresponding to that at which a power spectral density of the first signal presents a notch and, in the affirmative, to establish that the second signal is affected by the noise induced by the first signal, the at least one spectral feature comprising at least one notch in the spectrum of the quiet line noise over the twisted pair cable and/or at least one peak in the spectrum of the signal to noise ratio over the twisted pair cable.

### Brief description of the drawings

The present invention will become clearer from the following detailed description, given by way of example and not of limitation, to be read with reference to the accompanying drawings, wherein:

- Figure 1 schematically shows an exemplary scenario for the application of the method of the present invention;
- Figure 2 shows the power spectral density of a powerline signal;
- Figure 3 shows a first spectrum of the quiet line noise for a VDSL2 link in the absence of a powerline system, and a second spectrum of the quiet line noise for the same VDSL2 link in the proximity of a powerline system;
- Figure 4 shows a first spectrum of the signal-to-noise ratio for a VDSL2 link in the absence of a powerline system, and a second spectrum of the signal-to-noise ratio for the same VDSL2 link in the proximity of a powerline system;
- Figure 5 is a flow chart illustrating the steps of the method according to an embodiment of the present invention; and
- Figure 6 is a flow chart illustrating the steps of a quality assurance procedure making use of the method according to the present invention.

### Detailed description of preferred embodiments of the invention

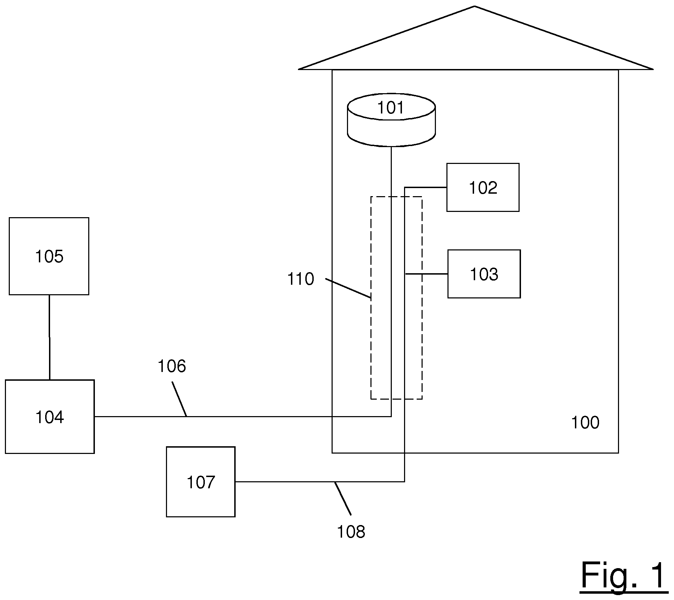

Figure 1 shows an exemplary scenario of application of the method according to the present invention. In an exemplary FTTB or FTTCab architecture, a building 100, comprising one or more apartments and/or offices, may comprise an integrated access device (IAD) 101 and one or more powerline devices. In Figure 1, two powerline devices 102, 103 are shown.

The IAD 101 may be installed at a user's premises, e.g. an apartment inside the building 100, and interfaces an access network (not shown in Figure 1) with a home network of a user. The access network comprises a digital subscriber line access multiplexer (DSLAM) 104 located outside the building 100. The DSLAM 104 is preferably connected to a processing unit 105.

The DSLAM 104 and the IAD 101 are connected by means of a data link 106. The DSLAM 104, the IAD 101 and the data link 106 preferably support a xDSL technology, for example the VDSL2 technology. The IAD 101 then preferably comprises a xDSL modem, in particular a VDSL2 modem. The data link 106 between the DSLAM 104 and the IAD 101 typically comprises a twisted pair cable comprising copper wires.

In the following, as a non limiting example, it will be assumed that the IAD 102, the DSLAM 104 and the data link 106 support the VDSL2 technology. Therefore, it will be assumed that VDSL2 signals are exchanged between the IAD 101 (in particular, the VDSL2 modem) and the DSLAM 104 along the data link 106. In the following, the data link 106 will be also referred to as VDSL2 link.

The assumption above is not limiting since the following description may be applied also when different technologies are considered for transmitting a signal over the data link. Indeed, the method of the present invention may be generally applied when the data link carries a signal according to a high speed transmission system operating within a frequency range at least partially overlapping the frequency range of a powerline signal, in particular at least partially overlapping a frequency range between about 1 MHz and 30 MHz.

The powerline devices 102, 103 are exemplarily located in two apartments/offices comprised in the building 100, and allow two users to use the powerline communication (PLC) technology for implementing a respective home network. A powerline device 102, 103 may comprise an Ethernet/powerline adapter. Each powerline device 102, 103 is connected to the electric power distribution network serving the building 100. In particular, each powerline device 102, 103 is connected to an electric power distribution cabinet 107 of the electric power distribution network, the cabinet 107 being located outside the building 100 or in the basement of the building 100. The connection between the cabinet 107 and each powerline device 102, 103 comprises an electric line 108 transporting an electric current to be supplied to the apartments/offices of the building 100. The electric line 108 may be laid down in a duct that runs vertically inside the building 100, as represented in Figure 1. At each floor of the building 100, the electric current transported by the electric line 108 is dropped from the line to serve one or more respective apartments/offices.

In the exemplary situation illustrated in Figure 1, it is assumed that the electric line 108 may be located in the proximity of the data link 106 connecting the DSLAM 104 and the IAD 101 for a given length, which is enclosed within a dashed box 110.

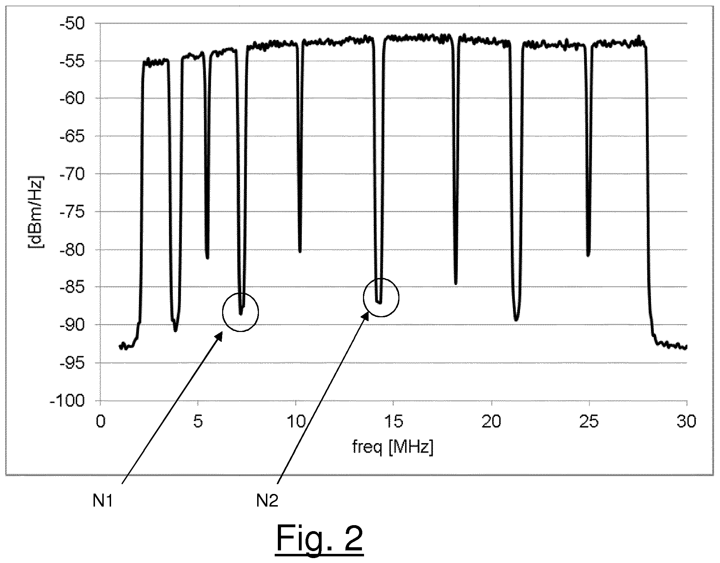

The inventors performed some tests on electric lines supporting the PLC technology and hence carrying a powerline signal. Figure 2 shows the power spectral density of a powerline signal measured during these tests and reported in units of dBm/Hz. The reference specification is the Homeplug AV specification (December 2005). The powerline apparatuses used during the tests were the following:

- Telecom Italia - PLT adapter manufactured by D-link (NMU 716845); and
- Telecom Italia - PLT adapter manufactured by Pirelli Broadband Solutions P.EX P200S 100-15-0-5-a (NMU 717146)

From the tests made, the inventors noticed that the power spectral density of the measured powerline signals comprises one or more peculiar spectral features, in particular one or more notches, i.e. portions of the power spectral density where the power of the signal drops to a minimum value.

Indeed, it is known that the notches in the power spectral density of a powerline signal are foreseen by the specification or standard of reference for the specific PLC technology considered. For instance, this is specified in the standard CENELEC EN 50561-1 : "Power line communication apparatus used in low-voltage installations - Radio disturbance characteristics - Limits and methods of measurement - Part 1: Apparatus for in-home use", Annex A.

In particular, the notches within the power spectral density of the powerline signal are introduced by filtering out the signal at predefined frequencies. The filtering is performed at the powerline device. According to the considered specification/standard, the predefined frequencies of the notches are typically chosen so that the powerline signal is minimum at frequencies traditionally allocated for other communication systems, such as amateur radio, in order to avoid that the powerline signal interferes with the signals of the other communication systems. The frequencies of the notches, in particular, may belong to the high frequency (HF) range from 3 to 30 MHz. For instance, the power spectral density shown in Figure 2 comprises a first notch N1 between 7 MHz and 7.20 MHz, and a second notch N2 between 14 MHz and 14.35 MHz.

The inventors realized that the presence of a noise induced by a powerline signal over a VDSL2 signal, transported over a twisted pair cable, may be sensed by determining if the noise superimposed over the VDSL2 signal comprises one or more respective peculiar spectral features, in particular one or more notches, at nearly the same predefined frequencies at which the powerline signal presents the spectral features described above, i.e. the notches N1, N2.

The inventors further perceived that the presence of a noise induced by a powerline signal on the VDSL2 signal transported over the twisted pair cable may be determined by measuring one or more parameters indicative of the overall noise along the data link carrying the VDSL2 signal. In particular, the inventors noticed that these parameters may be the QLN (Quiet Line Noise) and the SNR (Signal to Noise Ratio) available through the DELT test procedures that are typically carried out at the DSLAM and at the VDSL2 modem at the user's premises. Indeed, the QLN and SNR are measured per each carrier comprised within the VDSL2 signal, and hence they are collected as a function of the frequency. In particular, the QLN is measured in the absence of any signal over the data link between the DSLAM and the VDSL2 modem and hence this measurement requires transmission on the data link to be interrupted. On the other hand, the SNR may be measured on an active data link between the DSLAM and the VDSL2 modem and hence this measurement does not require transmission on the data link to be interrupted. The SNR is also dynamically updated during the transmission of the VDLS2 signal over the data link between the DSLAM and the VDSL2 modem.

Moreover, as known, the spectrum of the VDSL2 signal is subdivided in sub-bands, some of which are allocated to the downstream transmission of data, from the DSLAM to the VDSL2 modem, and the others to the upstream transmission of data, from the VDSL2 modem to the DSLAM. As far as DELT test procedures are concerned, the SNR and QLN measurements are performed by the DSLAM over the sub-bands allocated for the upstream transmission of data, and are performed by the VDSL2 modem over the sub-bands allocated to the downstream transmission of data. The measurements are then collected and merged at the DSLAM, which provides a spectrum of the QLN (indicated in the following also as QLN(f)), and a spectrum of the SNR (indicated in the following also as SNR(f)).

The inventors perceived that the presence of the noise caused by the powerline signal over the VDSL2 signal may be sensed by analyzing the measurements (of QLN and SNR) performed by the VDSL2 modem at the user's premises over the downstream sub-bands. Indeed, the VDSL2 modem is nearer than the DSLAM to the electric lines supporting the PLC technology and transporting the powerline signal. On the contrary, at the DSLAM, which is usually located hundred of meters far from the user's premises, the powerline signal is usually attenuated to an extent that it is almost undetectable. Therefore, the measurements performed by the VDSL2 modem over the downstream sub-bands are likely to be indicative of the presence of the noise caused by the powerline signal over the VDSL2 signal, while measurements performed by the DSLAM over the upstream sub-bands may not be useful for determining the presence of such noise.

The inventors performed some tests by considering a VDSL2 signal with the 17a profile transported over a data link between a DSLAM and a VDSL2 modem. The DSLAM used during the tests was a Huawei VDSL2 DSLAM, while the VDSL2 modem was a modem Telecom Italia Alice Fibra (AGPlus) - model Technicolor TG799 (NMU 722450).

For the tests, powerline devices supporting the HomePlug AV standard have been considered, in particular D-Link powerline devices and Pirelli powerline devices equipped with the chipset Qualcomm Atheros INT6400. Moreover, the data link and the electric line considered during the measurements coexisted for a length nearly equal to 12 m. The data link and the electric line were laid within the same duct having a diameter nearly equal to 20 mm. The distance between the DSLAM and the VDSL2 modem was nearly 400 m.

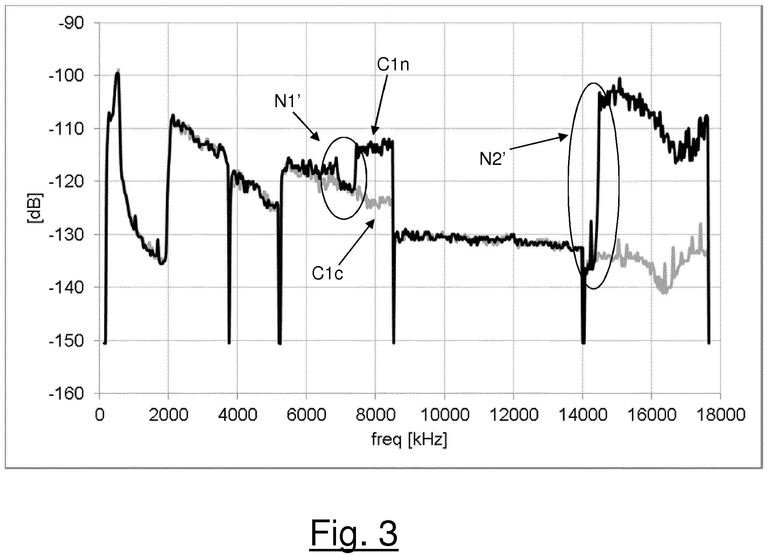

Figure 3 shows two curves, a grey curve C1c and a black curve C1n obtained from the measurements performed during the tests. Each of the grey curve C1c and the black curve C1n represents the QLN in dB units over the VDSL2 link, as a function of the frequency in units of kHz. The two curves are both obtained at the DSLAM by merging the measurements performed by the DSLAM over the upstream sub-bands and the measurements performed by the VDSL2 modem over the downstream sub-bands. In particular, the grey curve C1c represents the QLN(f) over the VDSL2 link in the absence of the powerline signal (i.e. when the powerline devices are switched off). The black curve C1n represents the QLN(f) over the VDSL2 link when the powerline signal is present (i.e. when the powerline devices are switched on). As can be seen on the black curve C1n, the QLN(f), when a powerline signal is present, comprises some notches, which are not present when the powerline signal is absent and which are positioned at predefined frequencies. The inventors noticed that these frequencies are frequencies allocated for the transmission of amateur radio signals. In particular, a first notch N1' is visible at a frequency between 7 MHz and 7.2 MHz and a second notch N2' is visible at a frequency between 14 MHz and 14.35 MHz. More in particular, the inventors noticed that, as far as the first notch N1' is considered, it comprises two visible edges, i.e. a falling edge where the noise drops from its current value to a local minimum value, followed by a rising edge, where the noise rises from the local minimum value to another level which results from the superposition of the noise of the VDSL2 link in the absence of a powerline signal and the noise caused by the powerline signal. As far as the second notch N2' is considered, only a rising edge is visible. The inventors noticed the second notch N2' is located at the boundary between an upstream sub-band and a downstream sub-band. Therefore, the inventors perceived that since the powerline signal measured by the DSLAM within the adjacent upstream sub-band is almost completely attenuated due to the propagation along the twisted pair cable, only the edge falling within the downstream band is visible within the VDSL2 modem measurement. Moreover, the inventors noticed that in principle, other notches within the spectrum of the QLN could be identified within the bandwidth of the "17a" profile of the VDSL2 signal (e.g. a notch slightly below 10 MHz, corresponding to the notch slightly below 10 MHz comprised within the power spectral density of the powerline signal shown in Figure 2), but in some cases these other notches fall within the upstream sub-bands and are not visible, due to the fact that the noise induced by the powerline signal and measured by the DSLAM is attenuated along the twisted pair cable. On the contrary, the noise induced by the powerline signal over the VDSL2 signal in the downstream sub-bands is clearly identifiable because the VDSL2 modem measures such noise in the proximity of the portion of the twisted pair cable which is subject to the interference caused by the powerline signal (i.e. the portion of the twisted pair cable that is located in the proximity of the electric line supporting the powerline signal).

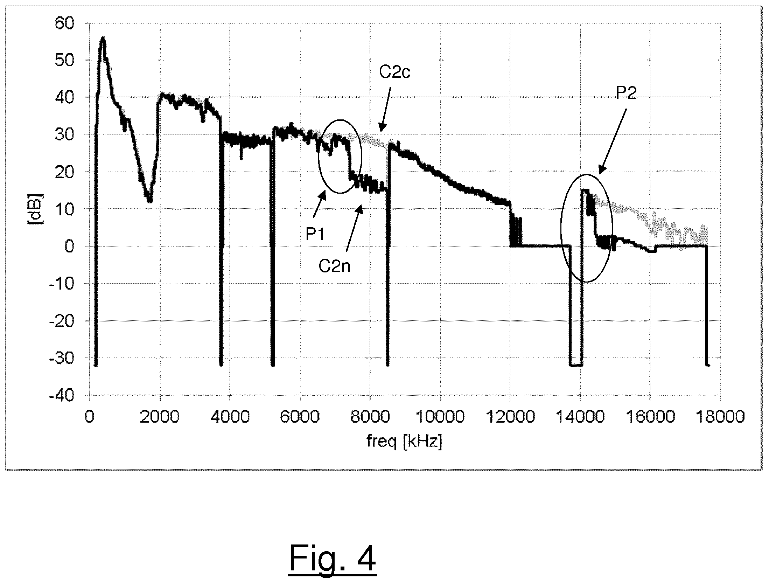

Figure 4 shows other two curves, a grey curve C2c and a black curve C2n obtained from the measurements performed during the tests described above. Each of the grey curve C2c and the black curve C2n represents the SNR in dB units of the VDSL2 data link as a function of the frequency in units of kHz. As described above with reference to the QLN(f) measurements of Figure 3, the two curves are both obtained at the DSLAM by merging the measurements performed by the DSLAM over the upstream sub-bands and the measurements performed by the VDSL2 modem over the downstream sub-bands. In particular, the grey curve C2c represents the SNR(f) of the VDSL2 link in the absence of the powerline signal (i.e. when the powerline devices are switched off). The black curve C2n represents the SNR(f) of the VDSL2 link when the powerline signal is present (i.e. when the powerline devices are switched on). As can be seen, the presence of the powerline signal causes the SNR(f) to be lower than the level achieved in the absence of the powerline signal. Moreover, at the frequencies where the power spectral density of the powerline signal (and the QLN(f), see the black curve C1n of Figure 3) shows the notches N1, N2, the SNR(f) shows peaks. At each peak the SNR(f) measured in presence of the powerline signal achieves substantially the same level achieved in the absence of the powerline signal, i.e., at the peak, the grey curve C2c and the black curve C2n are almost at the same level. Therefore, the SNR(f) in presence of the powerline signal (black curve C2n) shows a first peak P1 between 7 MHz and 7.2 MHz, which corresponds to the first notch N1' of the QLN(f) of Figure 3 (black curve C1n), and a second peak P2 between 14 MHz and 14.35 MHz, which corresponds to the second notch N2' of the QLN(f) of Figure 3 (black curve C1n).

The tests performed by the inventors confirmed that the notches N1', N2' in the QLN spectrum and/or the peaks P1, P2 in the SNR spectrum are markers indicating the presence of the noise induced by the powerline signal over the VDSL2 signal. Indeed, the frequencies of these markers correspond to the frequencies of the notches N1, N2 that are usually present within the power spectral density of the powerline signal, such frequencies being predefined according to the specification or standard of reference for the implementation of the PLC technology.

Moreover, the inventors perceived that the first notch N1' within the QLN spectrum is in principle identifiable over VDSL2 links capable of supporting transmission at a frequency higher than about 7.2 MHz. Therefore, in principle, the first notch N1', is identifiable over all the VDSL2 links, since all VDSL2 profiles provide for transmitting at frequencies higher that about 7.2 MHz. The second notch N2' is instead identifiable only over VDSL2 links actually supporting the "17a" and "30a" profiles, which allow using frequencies higher than about 14.35 MHz.

Furthermore, the inventors noticed that the second notch N2' in the QLN spectrum is deeper than the first notch N1' (and, correspondingly, the second peak P2 in the SNR spectrum is higher that the first peak P1, relative to the respective background level of SNR at the frequencies of the peak). Hence, the second notch N2' (the second peak P2) is a better identifiable marker indicating the presence of the noise caused by the powerline signal than the first notch N1' (the first peak P1).

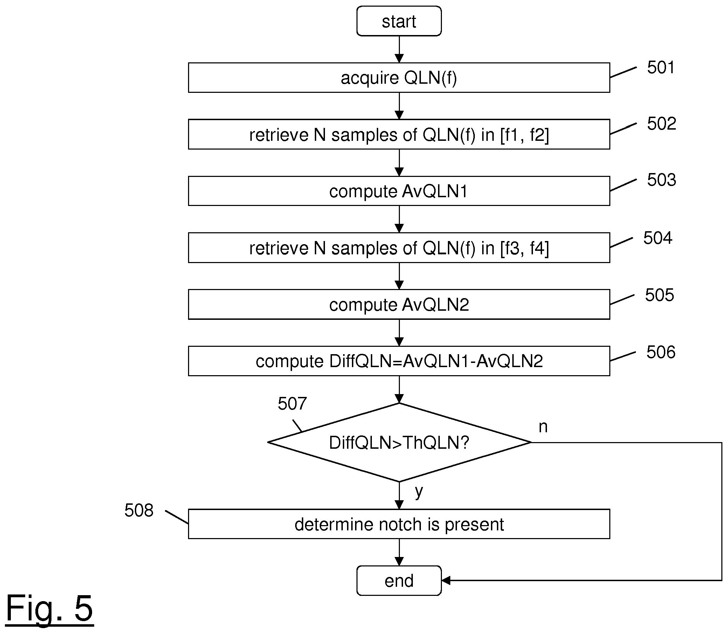

Figure 5 is a flowchart of the method for detecting a noise induced by a powerline signal transported along an electric line over a signal transported along a twisted pair cable (in particular, a twisted pair cable of an access network supporting the VDSL2 technology) according to an embodiment of the present invention. The method is preferably implemented at the processing unit 105 which is connected to the DSLAM 104. The processing unit 105 may be implemented as a stand-alone device comprising some hardware (e.g. a CPU) capable of executing a dedicated software. Alternatively, the processing unit 105 may be implemented as a software module which can be executed by the DSLAM 104.

As already described, the method according to the present invention provides for analyzing measurements of one or more parameters indicative of the noise along the data link carrying the VDSL2 signal. According to a first embodiment of the method of the present invention, the method provides for analyzing measurements of the quiet line noise, in particular measurements of the quiet line noise spectrum QLN(f), performed by the DSLAM and the VDSL2 modem and collected at the DSLAM. According to a second embodiment, the method provides for analyzing measurements of the signal to noise ratio, in particular measurements of the signal to noise spectrum SNR(f), performed by the DSLAM and the VDSL2 modem and collected at the DSLAM. According to a third embodiment, the method provides for analyzing measurements of both the quiet line noise spectrum QLN(f) and the signal to noise ratio spectrum SNR(f).

In the following, with reference to the flowchart of Figure 5, the first embodiment according to which the analyzed parameter is the QLN will be described.

At step 501, the processing unit 105 preferably acquires from the DSLAM a measurement of the QLN(f) along the data link carrying the VDSL2 signal.

At step 502, the processing unit 105 preferably retrieves, from the QLN(f) measurement, a first number NS1 of samples of the QLN(f) within a first sub-band [f1, f2] of frequencies comprised between a first frequency f1 and a second frequency f2. The samples of the QLN(f) retrieved within the first sub-band [f1, f2] will be indicated in the following as $QLN1(f_i)$, i=1, 2, ..., NS1.

Preferably, the first number NS1 is an integer number higher than 1. Preferably, the first number NS1 is equal to 5. Moreover, preferably, the samples $QLN1(f_i)$, i=1, 2, ..., NS1 are spaced by a frequency interval which is equal to 34.5 kHz.

Indeed, the inventors noticed that a frequency interval between the samples equal to 34.5 kHz advantageously allows implementing the method according to the present invention when measurements from different DSLAMs (e.g. DSLAMs of different manufacturers) are to be considered. Indeed, the QLN(f) and SNR(f) measurements taken by different DSLAMs may have different resolutions: the resolution may range between taking one sample per carrier of the VDSL2 signal to taking one sample every 8 carriers of the VDSL2 signal. Since the VDSL2 carriers are spaced by 4.3125 kHz, the majority of different DSLAMs allow obtaining one sample every 8x4.3125 kHz=34.5 kHz.

Further, preferably, the frequencies comprised within the first sub-band [f1, f2] are higher than the frequency of the first notch N1'. In particular, preferably, the first frequency f1 is equal to about 7.4 MHz and the second frequency f2 is equal to about 7.6 MHz.

At step 503, the processing unit 105 preferably computes a first QLN average AvQLN1 by averaging the values of the NS1 samples retrieved at step 502. The first QLN average AvQLN1 is computed according to the following equation:

$$AvQLN1 = \sum_{i=1}^{NS1} \frac{QLN1(f_i)}{NS1} \quad . \tag{1}$$

At step 504 the processing unit 105 preferably retrieves, from the QLN(f) measurement, a second number NS2 of samples of the QLN(f) within a second sub-band [f3, f4] of frequencies comprised between a third frequency f3 and a fourth frequency f4. The samples of the QLN(f) retrieved within the second sub-band [f3, f4] will be indicated in the following as $QLN2(f_j)$, j=1, 2, ..., NS2.

Preferably, the second number NS2 is an integer number higher than 1. Preferably, also the second number NS2 is equal to 5. Moreover, preferably, the samples $QLN2(f_j)$, j=1, 2, ..., NS2 are spaced by a frequency interval which is equal to 34.5 kHz. Further, preferably, the second sub-band [f3, f4] is substantially centered around the frequency of the first notch N1'. In particular, preferably, the third frequency f3 is equal to about 7 MHz and the fourth frequency f4 is equal to about 7.2 MHz

At step 505, the processing unit 105 preferably computes a second QLN average AvQLN2 by averaging the values of the NS2 samples retrieved at step 504. The second QLN average AvQLN2 is computed according to the

following equation:

$$AvQLN2 = \sum_{j=1}^{NS2} \frac{QLN2(f_j)}{NS2} \ . \qquad\qquad [2]$$

Then, at step 506, the processing unit 105 preferably computes a checking parameter on the basis of the first QLN average AvQLN1 and the second QLN average AvQLN2. In particular, according to this embodiment, the checking parameter is the difference DiffQLN between the first QLN average AvQLN1 and the second QLN average AvQLN2 according to the following equation:

$$DiffQLN= AvQLN1 - AvQLN2 \ . \qquad\qquad [3]$$

At step 507, the processing unit 105 preferably checks whether the difference DiffQLN is higher than a threshold QLNTh. The threshold QLNTh is preferably equal to about 7 dB. In case the difference DiffQLN is higher than the threshold QLNTh, at step 508 the processing unit 105 preferably determines that the first notch N1' is actually present within the QLN(f) measurement and that the VDSL2 signal is actually affected by noise due to the presence of a powerline signal.

In the following, steps 502-508 above will be described again with reference to the second embodiment according to which the analyzed parameter is the SNR.

According to this second embodiment, at step 502, the processing unit 105 preferably retrieves, from the SNR(f) measurement, a first number NS1 of samples of the SNR(f) within the first sub-band [f1, f2] of frequencies, these samples being indicated in the following as SNR($f_i$), i=1, 2, ..., NS1. At step 503, the processing unit 105 preferably computes a first SNR average AvSNR1 by averaging the values of the NS1 samples retrieved at step 502. The first SNR average AvSNR1 is computed according to the following equation:

$$AvSNR1 = \sum_{i=1}^{NS1} \frac{SNR1(f_i)}{NS1} \ . \qquad\qquad [4]$$

Then, at step 504 the processing unit 105 preferably retrieves, from the SNR(f) measurement, a second number NS1 of samples of the SNR(f) within the second sub-band [f3, f4] of frequencies. The samples of the QLN(f) retrieved within the second sub-band [f3, f4], these samples being indicated in the following as SNR($f_j$), j=1, 2, ..., NS2.

At step 505, the processing unit 105 preferably computes a second SNR average AvSNR2 by averaging the values of the NS2 samples retrieved at step 504. The second SNR average AvSNR2 is computed according to the following equation:

$$AvSNR2 = \sum_{j=1}^{NS2} \frac{SNR2(f_j)}{NS2} \ . \qquad\qquad [5]$$

Then, at step 506, the processing unit 105 preferably computes a checking parameter on the basis of the first SNR average AvSNR1 and the second SNR average AvSNR2. In particular, according to this embodiment, the checking parameter is the difference DiffSNR between the second average SNR value AvSNR2 and the first average SNR value AvSNR1 according to the following equation:

$$DiffSNR= AvSNR2 - AvSNR1 \ . \qquad\qquad [6]$$

As can be noticed by comparing equations [3] and [6], the difference DiffQLN is computed by subtracting the QLN average value obtained by averaging the values of the QLN(f) over the second sub-band [f3, f4] from the QLN average value obtained by averaging the values of the QLN(f) over the first sub-band [f1, f2], while, on the contrary, the difference DiffSNR is computed by subtracting the SNR average value obtained by averaging the values of the SNR(f) over the first sub-band [f1, f2] from the SNR average value obtained by averaging the values of the SNR(f) over the second sub-band [f3, f4].

At step 507, the processing unit 105 preferably checks whether the difference DiffSNR is higher than a threshold SNRTh. The threshold SNRTh is preferably equal to about 10 dB. In case the difference DiffSNR is higher than the threshold SNRTh, at step 508 the processing unit 105 preferably determines that the first peak P1 is actually present within the SNR(f) measurement and that the VDSL2 signal is actually affected by noise due to the presence of a powerline signal.

According to the third embodiment of the method of the present invention, measurements of both the quiet line noise QLN(f) and the signal to noise ratio SNR(f) are acquired by the processing unit 105 at step 501. Then, steps 502-508 as applied to the QLN(f) measurement and steps 502-508 as applied to the SNR(f) measurement are performed in parallel. In the following, only a brief description of this embodiment will be given, as a detailed description can be simply recovered by merging the details given above with reference to the case in which the measurement of QLN(f) is considered and the case in which the measurement of SNR(f) is considered.

According to this third embodiment, the processing unit 105 retrieves samples of both the QLN(f) and the SNR(f) within the first sub-band [f1, f2] and the second sub-band [f3, f4], computes respective average values of both the QLN samples and the SNR samples within each sub-band and computes the difference between these average values, as described above. According to this embodiment, the check at step 507 is performed by considering both the difference DiffQLN between the average values of the QLN samples in the first sub-band and second sub-band respectively and the difference DiffSNR between the average values of the SNR samples in the second sub-band and first sub-band respectively. In this case, at step 508, the processing unit 105 preferably determines that the first notch N1' is actually present within the QLN(f) measurement and that the first peak P1 is actually present within the SNR(f) measurement (and, hence, that the VDSL2 signal is actually affected by a noise due to a powerline signal) if each difference DiffQLN, DiffSNR is higher than the respective threshold QLNTh, SNRTh.

The method of the present invention advantageously allows detecting the presence of a noise induced by a powerline signal over a VDSL2 signal in a very simple and reliable way. Indeed, the parameters that are analyzed are easily available at the DSLAM since they are measured according to standard test procedures. Therefore, the method of the present invention does not require any extra amount of measurement operations beyond those already performed by the DSLAM and the VDSL2 modem. Moreover, an operator may analyze only the spectrum of the QLN, only the spectrum of the SNR or both the parameters and hence a high degree of reliability in detecting the noise induced by a powerline signal may be achieved. Finally, the presence of the first notch N1 or the first peak P1 at a frequency between 7 MHz and 7.2 MHz may be advantageously identified for all the VDSL2 profiles, which indeed provide for transmitting signals with bandwidths at least up to 8 MHz.

According to further embodiments of the method of the present invention, the procedures described above relative to the first, second and third embodiments of the present invention may be repeated for determining the presence, within the spectrum of the quite line noise and/or the spectrum of the signal to noise ratio, of the second notch N2 and/or the second peak P2, respectively.

Determining the presence of the second notch N2 and/or the second peak P2 may be advantageously performed, after determination of the presence of the first notch N1 or peak P1, for those VDSL2 systems employing VDSL2 profiles capable of using higher frequencies, such as the "17a" and the "30a" profiles. Advantageously, determination of the presence of the second notch N2 or peak P2 may be used as a counter evidence that a noise induced by a powerline signal affects the VDSL2 signal. Moreover, as already described above, the second notch N2 or second peak P2 is a better identifiable marker than the first notch N1 or peak P1, and hence this further determination allows performing a more reliable detection of the noise induced by the powerline signal over the VDLS2 signal.

The procedures for determining the presence of the second notch N2' or the second peak P2 will not be described in greater detail in the following since they are substantially the same as described above. They differ from the procedures described above only in the values of the first frequency f1, the second frequency f2, the third frequency f3 and the fourth frequency f4. In particular, for determining the presence of the second notch N2' or the second peak P2, the first frequency f1 is preferably equal to about 14.5 MHz, the second frequency f2 is preferably equal to about 14.7, the third frequency is preferably equal to about 14.1 MHz, and the fourth frequency f4 is preferably equal to about 14.3 MHz.

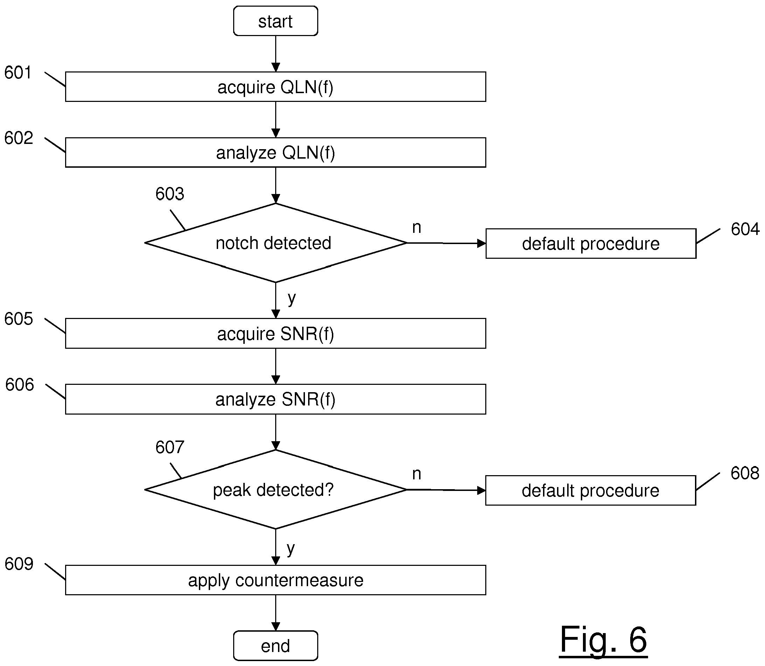

Figure 6 shows a flowchart illustrating the steps of a quality assurance procedure related to the provisioning of a service over the VDSL2 link and making use of the method for detecting a noise induced by a powerline system on a twisted pair cable according to the embodiments of the present invention. The quality assurance procedure may be implemented by an operator of a support service who receives a report from a user about a performance deterioration over the twisted pair cable (e.g. reduced data transfer speed from/to the Internet and/or multiple connection drops in a short time causing interruptions in the provisioning of a service such as video on demand or the like). The operator cooperates with the processing unit 105 for checking whether the performance deterioration is caused by a noise induced by a powerline signal.

When the operator receives a user's report, the operator may ask the user to switch the VDSL2 modem off and then to switch it on. During the phase in which the VDSL2 modem is restarting, the VDSL2 modem measures the QLN(f) over the downstream sub-bands of the VDSL2 signal. Once the VDSL2 modem restarted, the modem also measures the SNR(f).

Hence, at step 601, the processing unit 105 acquires the measurement of the QLN(f) and preferably, at step 602, implements the procedure described above with reference to the steps 502-508 of the method according to the first embodiment of the present invention for detecting the presence of the first notch N1 within the spectrum of the QLN. Then, possibly, the processing unit 105 repeats steps 502-508 for detecting also the presence of the second notch N2 as described above.

The outcome of step 602 is checked at step 603. If the first notch N1 and, possibly, the second notch N2 are identified within the spectrum of the QLN, the processing unit 105 may determine that a noise induced by a powerline signal is present over the VDSL2 signal. Alternatively, as illustrated in the flowchart of Figure 6, it may perform a further check by analysing the spectrum of the SNR. Hence, at step 605 the processing unit 105 preferably acquires the measurement of the SNR(f) and at step 606 implements the procedure described above with reference to the steps 502-508 of the method according to the second embodiment of the present invention for detecting the presence of the first peak P1. Then, possibly, the processing unit 105 repeats steps 502-508 for detecting also the presence of the second peak P2, as described above.

The outcome of step 606 is checked at step 607. If the first peak P1 and, possibly, the second peak P2 are identified within the spectrum of the SNR, the processing unit 105 preferably determines that a noise induced by a powerline signal is present over the VDSL2 signal. In this case, at step 609, the operator may inform the user that a powerline signal is affecting the VDSL2 signal and may apply a countermeasure in order to improve the performance of the VDSL2 signal over the twisted pair cable. In particular, if the powerline signal comes from the home network of the user itself, the operator may ask the user to switch off the powerline system. If the powerline signal can not be suppressed (because, e.g., it comes from the home network of another user), the operator may modify the VDSL2 profile of the user. For instance, the operator may raise a noise margin of the VDSL2 profile from 6 dB to 9 dB. Otherwise, the operator may intervene by reducing the bandwidth of the VDSL2 signal and passing from, e.g., a "17a" profile to a "8b" profile, so that the data link is more robust. In this case, interruptions in the provisioning of the service are avoided and the quality of service improves, at the expense of speed.

If, at step 603 or 607, the processing unit 105 does not detect any notch within the QLN(f) and any peak detected within the SNR(f), respectively, the processing unit 105 preferably determines that the noise over the VDSL2 signal is not caused by a powerline signal. In this case the operator may apply a default procedure for improving the quality of service, this default procedure being not described here as it is not relevant to the present description.

Therefore, application of the method of the present invention advantageously allows improving quality assurance procedures as that described above. Indeed, the operator of the support service, upon reception of the user's report about the performance deterioration of the VDSL2 link, may easily operate the processing unit 105 to perform the method according to an embodiment of the present invention. This allows to check whether the performance deterioration over the VDSL2 link is due to the presence of a powerline signal, being this powerline signal transmitted within the home network of the user itself or within the home network of another user. Thanks to the method of the present invention, if it is detected that the noise is induced by the powerline signal, the operator may apply a countermeasure for improving the quality of service, e.g. by modifying the user's VDSL2 profile. The quality assurance procedure is therefore more efficient.

**Claims**

1. A method for detecting a noise induced by a first signal transmitted along an electric line (108) over a second signal transmitted along a twisted pair cable (106), said first signal being a powerline signal, said method comprising:

    a) acquiring a spectrum of a parameter (QLN, SNR) indicative of an overall noise over said twisted pair cable (106), said spectrum comprising a spectrum (QLN(f)) of a quiet line noise over said twisted pair cable and/or a spectrum (SNR(f)) of a signal to noise ratio over said twisted pair cable;
    b) checking whether said spectrum (QLN(f), SNR(f)) comprises at least one spectral feature (N1', N2', P1, P2) at a frequency corresponding to that at which a power spectral density of said first signal presents a notch (N1, N2), said at least one spectral feature (N1', N2', P1, P2) comprising at least one notch in said spectrum (QLN(f)) of said quiet line noise over said twisted pair cable and/or at least one peak in said spectrum (SNR(f)) of said signal to noise ratio over said twisted pair cable; and
    c) in the affirmative, establishing that said second signal is affected by said noise induced by said first signal.

2. The method according to claim 1, wherein said second signal is a very high bit rate digital subscriber line 2, VDSL2, signal.

3. The method according to any of the preceding claims, wherein said step b) comprises retrieving from said spectrum (QLN(f), SNR(f)) a first number (NS1) of samples (QLN1(f$_i$), SNR(f$_i$)) of said parameter within a first frequency band between a first frequency (f1) and a second frequency (f2), said first frequency band comprising higher frequencies (f1, f2) than a frequency of said at least one spectral feature (N1', N2', P1, P2).

4. The method according to claim 3, wherein said first frequency (f1) is equal to about 7.4 MHz and said second frequency (f2) is equal to about 7.6 MHz.

5. The method according to claim 3, wherein said first frequency (f1) is equal to about 14.5 MHz and said second frequency (f2) is equal to about 14.7 MHz.

6. The method according to any of claims 3 to 5, wherein said first number (NS1) of samples (QLN1(f$_i$), SNR(f$_i$)) are spaced by a frequency interval equal to about 34.5 kHz.

7. The method according to any of claims 3 to 6, wherein said step b) comprises retrieving from said spectrum (QLN(f), SNR(f)) a second number (NS2) of samples (QLN1(f$_j$), SNR(f$_j$)) of said parameter within a second frequency band between a third frequency (f3) and a fourth frequency (f4), said second frequency band comprising frequencies (f3, f4) that are substantially centered around the frequency of said at least one spectral feature (N1', N2', P1, P2).

8. The method according to claim 7, wherein said third frequency (f3) is equal to about 7 MHz and said fourth frequency (f4) is equal to about 7.2 MHz.

9. The method according to claim 9, wherein said third frequency (f3) is equal to about 14.1 MHz and said fourth frequency (f4) is equal to about 14.3 MHz.

10. The method according to any of claims 6 to 9, wherein said second number (NS2) of samples (QLN1(f$_j$), SNR(f$_j$)) are spaced by a frequency interval equal to about 34.5 kHz.

11. The method according to any of claims 7 to 10, wherein said step b) comprises:

   - computing a first average (AvQLN1, AvSNR1) of said first number (NS1) of samples (QLN1(f$_i$), SNR(f$_i$));
   - computing a second average (AvQLN2, AvSNR2) of said second number (NS2) of samples (QLN1(f$_j$), SNR(f$_j$);
   - computing a checking parameter (DiffQLN, DiffSNR) on the basis of said first average (AvQLN1, AvSNR1) and said second average (AvQLN2, AvSNR2); and
   - checking whether said checking parameter is higher than a threshold (QLNTh, SNRTh).

12. A system for detecting a noise induced by a powerline signal transmitted along an electric line (108) over a second signal transmitted along a twisted pair cable (106), said first signal being a powerline signal, said system comprising:

   - an acquisition unit (104) configured to acquire a spectrum of a parameter (QLN, SNR) indicative of an overall noise over said twisted pair cable (106), said spectrum comprising a spectrum (QLN(f)) of a quiet line noise over said twisted pair cable and/or a spectrum (SNR(f)) of a signal to noise ratio over said twisted pair cable; and
   - a processing unit (105) configured to check whether said spectrum comprises at least one spectral feature (N1', N2', P1, P2) at a frequency corresponding to that at which a power spectral density of said first signal presents a notch (N1, N2) and, in the affirmative, to establish that said second signal is affected by said noise induced by said first signal, said at least one spectral feature (N1', N2', P1, P2) comprising at least one notch in said spectrum (QLN(f)) of said quiet line noise over said twisted pair cable and/or at least one peak in said spectrum (SNR(f)) of said signal to noise ratio over said twisted pair cable.

**Patentansprüche**

1. Verfahren zum Erkennen eines Rauschens, das durch ein erstes Signal, das entlang einer elektrischen Leitung (108) gesendet wird, über einem zweiten Signal bewirkt wird, das entlang eines verdrillten Kabelpaars (106) gesendet wird, wobei das erste Signal ein Stromleitungssignal ist, wobei das Verfahren umfasst:

   a) Beschaffen eines Spektrums eines Parameters (QLN, SNR), das ein Gesamtrauschen über dem verdrillten Kabelpaar (106) anzeigt, wobei das Spektrum ein Spektrum (QLN(f)) eines Ruhezustands-Leitungsrauschens über dem verdrillten Kabelpaar und/oder ein Spektrum (SNR(f)) eines Signal-Rausch-Verhältnisses über dem verdrillten Kabelpaar umfasst,

b) Überprüfen, ob das Spektrum (QLN(f), SNR(f)) mindestens ein spektrales Merkmal (N1', N2', P1, P2) bei einer Frequenz aufweist, die derjenigen entspricht, bei der eine Leistungsspektraldichte des ersten Signals einen Einschnitt (N1, N2) zeigt, wobei das mindestens eine spektrale Merkmal (N1', N2', P1, P2) mindestens einen Einschnitt in dem Spektrum (QLN(f)) des Ruhezustands-Leitungsrauschens über dem verdrillten Kabelpaar und/oder mindestens einen Spitzenwert in dem Spektrum (SNR(f)) des Signal-Rausch-Verhältnisses über dem verdrillten Kabelpaar aufweist, und

c) im Bestätigungsfall festlegen, dass das zweite Signal durch das Rauschen beeinflusst wird, das durch das erste Signal bewirkt wird.

2. Verfahren nach Anspruch 1, wobei das zweite Signal ein Signal auf einer digitalen Teilnehmerleitung 2 mit einer sehr hohen Bitrate, VDSL2, ist.

3. Verfahren nach einem der vorhergehenden Ansprüche, wobei der Schritt b) ein Abrufen einer ersten Anzahl (NS1) von Abtastwerten (QLN1($f_i$), SNR($f_i$)) des Parameters in einem ersten Frequenzband zwischen einer ersten Frequenz (f1) und einer zweiten Frequenz (f2) aus dem Spektrum (QLN(f), SNR(f)) umfasst, wobei das erste Frequenzband höhere Frequenzen (f1, f2) als eine Frequenz des mindestens einen spektralen Merkmals (N1', N2', P1, P2) aufweist.

4. Verfahren nach Anspruch 3, wobei die erste Frequenz (f1) gleich circa 7,4 MHz und die zweite Frequenz (f2) gleich circa 7,6 MHz ist.

5. Verfahren nach Anspruch 3, wobei die erste Frequenz (f1) gleich circa 14,5 MHz und die zweite Frequenz (f2) gleich circa 14,7 MHz ist.

6. Verfahren nach einem der Ansprüche 3 bis 5, wobei die erste Anzahl (NS1) von Abtastwerten (QLN($f_i$), SNR($f_i$)) in Frequenzintervallabständen angeordnet ist, die gleich circa 34,5 kHz sind.

7. Verfahren nach einem der Ansprüche 3 bis 6, wobei der Schritt b) ein Abrufen einer zweiten Anzahl (NS2) von Abtastwerten (QLN1($f_j$), SNR($f_j$)) des Parameters in einem zweiten Frequenzband zwischen einer dritten Frequenz (f3) und einer vierten Frequenz (f4) aus dem Spektrum (QLN(f), SNR(f)) umfasst, wobei das zweite Frequenzband Frequenzen (f3, f4) aufweist, die im Wesentlichen um die Frequenz des mindestens einen spektralen Merkmals (N1', N2', P1, P2) herum zentriert sind.

8. Verfahren nach Anspruch 7, wobei die dritte Frequenz (f3) gleich circa 7 MHz und die vierte Frequenz (f4) gleich circa 7,2 MHz ist.

9. Verfahren nach Anspruch 9, wobei die dritte Frequenz (f3) gleich circa 14,1 MHz und die vierte Frequenz (f4) gleich circa 14,3 MHz ist.

10. Verfahren nach einem der Ansprüche 6 bis 9, wobei die zweite Anzahl (NS2) von Abtastwerten (QLN1($f_j$), SNR($f_j$)) in Frequenzintervallabständen angeordnet ist, die gleich circa 34,5 kHz sind.

11. Verfahren nach einem der Ansprüche 7 bis 10, wobei der Schritt b) umfasst:

- Berechnen eines ersten Mittelwertes (AvQLN1, AvSNR1) von der ersten Anzahl (NS1) von Abtastwerten (QLN1($f_i$), SNR($f_i$)),
- Berechnen eines zweiten Mittelwertes (AvQLN2, AvSNR2) von der zweiten Anzahl (NS2) von Abtastwerten (QLN1($f_j$), SNR($f_j$)),
- Berechnen eines Prüfparameters (DiffQLN, DiffSNR) auf der Basis des ersten Mittelwertes (AvQLN1, AvSNR1) und des zweiten Mittelwertes (AvQLN2, AvSNR2) und
- Prüfen, ob der Prüfparameter größer als ein Schwellenwert (QLNTh, SNRTh) ist.

12. System zum Erkennen eines Rauschens, das durch ein Stromleitungssignal, das entlang einer elektrischen Leitung (108) gesendet wird, über einem zweiten Signal bewirkt wird, das entlang eines verdrillten Kabelpaars (106) gesendet wird, wobei das erste Signal ein Stromleitungssignal ist, wobei das System aufweist:

- eine Beschaffungseinheit (104), die eingerichtet ist zum Beschaffen eines Spektrums eines Parameters (QLN, SNR), das ein Gesamtrauschen über dem verdrillten Kabelpaar (106) anzeigt, wobei das Spektrum ein Spektrum (QLN(f)) eines Ruhezustands-Leitungsrauschens über dem verdrillten Kabelpaar und/oder ein Spektrum (SNR(f)) eines Signal-Rausch-Verhältnisses über dem verdrillten Kabelpaar umfasst, und
- eine Verarbeitungseinheit (105), die eingerichtet ist zum Überprüfen, ob das Spektrum mindestens ein spektrales Merkmal (N1', N2', P1, P2) bei einer Frequenz aufweist, die derjenigen entspricht, bei der eine Leistungsspektraldichte des ersten Signals einen Einschnitt (N1, N2) zeigt, um im Bestätigungsfall festzulegen, dass das zweite Signal durch das Rauschen beeinflusst wird, das durch das erste Signal bewirkt wird, wobei das mindestens eine spektrale Merkmal (N1', N2', P1, P2) mindestens einen Einschnitt in dem Spektrum (QLN(f)) des Ruhezustands-Leitungsrauschens über dem verdrillten Kabelpaart und/oder mindestens einen Spitzenwert in dem Spektrum (SNR(f)) des Signal-Rausch-Verhältnisses über dem verdrillten Kabelpaar aufweist.

**Revendications**

1. Procédé de détection d'un bruit induit par un premier signal transmis le long d'une ligne électrique (108) sur un second signal transmis le long d'un câble à paire torsadée (106), ledit premier signal étant un signal sur courant porteur, ledit procédé comprenant les étapes ci-dessous consistant à :

   a) acquérir un spectre d'un paramètre (QLN, SNR) indicatif d'un bruit global sur ledit câble à paire torsadée (106), ledit spectre comprenant un spectre (QLN(f)) d'un bruit de ligne silencieuse sur ledit câble à paire torsadée et/ou un spectre (SNR(f)) d'un rapport « signal sur bruit » sur ledit câble à paire torsadée ;
   b) vérifier si ledit spectre (QLN(f), SNR(f)) comprend au moins une caractéristique spectrale (N1', N2', P1, P2) à une fréquence correspondant à celle à laquelle une densité spectrale de puissance dudit premier signal présente une entaille (N1, N2), ladite au moins une caractéristique spectrale (N1', N2', P1, P2) comprenant au moins une entaille dans ledit spectre (QLN(f)) dudit bruit de ligne silencieuse sur ledit câble à paire torsadée et/ou au moins un pic dans ledit spectre (SNR(f)) dudit rapport « signal sur bruit » sur ledit câble à paire torsadée ; et
   c) dans l'affirmative, établir que ledit second signal est affecté par ledit bruit induit par ledit premier signal.

2. Procédé selon la revendication 1, dans lequel ledit second signal est un signal de ligne d'abonné numérique à très haut débit binaire 2, VDSL2.

3. Procédé selon l'une quelconque des revendications précédentes, dans lequel ladite étape b) comprend l'étape consistant à récupérer, à partir dudit spectre (QLN(f), SNR(f))), un premier nombre (NS1) d'échantillons (QLN1(f$_i$), SNR(f$_i$)) dudit paramètre dans une première bande de fréquences comprise entre une première fréquence (f1) et une seconde fréquence (f2), ladite première bande de fréquences comprenant des fréquences plus élevées (f1, f2) qu'une fréquence de ladite au moins une caractéristique spectrale (N1', N2', P1, P2).

4. Procédé selon la revendication 3, dans lequel ladite première fréquence (f1) est égale à environ 7,4 MHz et ladite seconde fréquence (f2) est égale à environ 7,6 MHz.

5. Procédé selon la revendication 3, dans lequel ladite première fréquence (f1) est égale à environ 14,5 MHz et ladite seconde fréquence (f2) est égale à environ 14,7 MHz.

6. Procédé selon l'une quelconque des revendications 3 à 5, dans lequel les échantillons dudit premier nombre (NS1) d'échantillons (QLN1(f$_i$), SNR(f$_i$)) sont espacés d'un intervalle de fréquence égal à environ 34,5 kHz.

7. Procédé selon l'une quelconque des revendications 3 à 6, dans lequel ladite étape b) comprend l'étape consistant à récupérer, à partir dudit spectre (QLN(f), SNR(f)), un second nombre (NS2) d'échantillons (QLN1(f$_j$), SNR(f$_j$)) dudit paramètre dans une seconde bande de fréquences comprise entre une troisième fréquence (f3) et une quatrième fréquence (f4), ladite seconde bande de fréquences comprenant des fréquences (f3, f4) qui sont sensiblement centrées autour de la fréquence de ladite au moins une caractéristique spectrale (N1', N2', P1, P2).

8. Procédé selon la revendication 7, dans lequel ladite troisième fréquence (f3) est égale à environ 7 MHz et ladite quatrième fréquence (f4) est égale à environ 7,2 MHz.

9. Procédé selon la revendication 9, dans lequel ladite troisième fréquence (f3) est égale à environ 14,1 MHz et ladite quatrième fréquence (f4) est égale à environ 14,3 MHz.

**10.** Procédé selon l'une quelconque des revendications 6 à 9, dans lequel les échantillons dudit second nombre (NS2) d'échantillons (QLN1($f_j$), SNR($f_j$)) sont espacés d'un intervalle de fréquence égal à environ 34,5 kHz.

**11.** Procédé selon l'une quelconque des revendications 7 à 10, dans lequel ladite étape b) comprend les étapes ci-dessous consistant à :

- calculer une première moyenne (AvQLN1, AvSNR1) dudit premier nombre (NS1) d'échantillons (QLN1($f_i$), SNR($f_i$)) ;
- calculer une seconde moyenne (AvQLN2, AvSNR2) dudit second nombre (NS2) d'échantillons (QLN1($f_j$), SNR($f_j$)) ;
- calculer un paramètre de vérification (DiffQLN, DiffSNR) sur la base de ladite première moyenne (AvQLN1, AvSNR1) et de ladite seconde moyenne (AvQLN2, AvSNR2) ; et
- vérifier si ledit paramètre de vérification est supérieur à un seuil (QLNTh, SNRTh).

**12.** Système destiné à détecter un bruit induit par un signal sur courant porteur transmis le long d'une ligne électrique (108) sur un second signal transmis le long d'un câble à paire torsadée (106), ledit premier signal étant un signal sur courant porteur, ledit système comprenant :

- une unité d'acquisition (104) configurée de manière à acquérir un spectre d'un paramètre (QLN, SNR) indicatif d'un bruit global sur ledit câble à paire torsadée (106), ledit spectre comprenant un spectre (QLN(f)) d'un bruit de ligne silencieuse sur ledit câble à paire torsadée et/ou un spectre (SNR(f)) d'un rapport « signal sur bruit » sur ledit câble à paire torsadée ;
- une unité de traitement (105) configurée de manière à vérifier si ledit spectre comprend au moins une caractéristique spectrale (N1', N2', P1, P2) à une fréquence correspondant à celle à laquelle une densité spectrale de puissance dudit premier signal présente une entaille (N1, N2), et, dans l'affirmative, à établir que ledit second signal est affecté par ledit bruit induit par ledit premier signal, ladite au moins une caractéristique spectrale (N1', N2', P1, P2) comprenant au moins une entaille dans ledit spectre (QLN(f)) dudit bruit de ligne silencieuse sur ledit câble à paire torsadée et/ou au moins un pic dans ledit spectre (SNR(f)) dudit rapport « signal sur bruit » sur ledit câble à paire torsadée.

Fig. 1

Fig. 2

Fig. 3

Fig. 4

EP 3 014 861 B1

```
                          ┌─────────┐
                          │  start  │
                          └─────────┘
                               │
                               ▼
        ┌──────────────────────────────────────────────┐
        │              acquire QLN(f)                   │────  501
        └──────────────────────────────────────────────┘
                               │
                               ▼
        ┌──────────────────────────────────────────────┐
        │      retrieve N samples of QLN(f) in [f1, f2] │────  502
        └──────────────────────────────────────────────┘
                               │
                               ▼
        ┌──────────────────────────────────────────────┐
        │              compute AvQLN1                   │────  503
        └──────────────────────────────────────────────┘
                               │
                               ▼
        ┌──────────────────────────────────────────────┐
        │      retrieve N samples of QLN(f) in [f3, f4] │────  504
        └──────────────────────────────────────────────┘
                               │
                               ▼
        ┌──────────────────────────────────────────────┐
        │              compute AvQLN2                   │────  505
        └──────────────────────────────────────────────┘
                               │
                               ▼
        ┌──────────────────────────────────────────────┐
        │      compute DiffQLN=AvQLN1-AvQLN2            │────  506
        └──────────────────────────────────────────────┘
                               │
                               ▼
   507                    ◇ DiffQLN>ThQLN? ◇──── n ──────┐
                               │                         │
                               │ y                       │
                               ▼                         │
 508 ──┌──────────────────────────────────────┐          │
       │        determine notch is present    │          │
       └──────────────────────────────────────┘          │
                               │                          │
                               ▼                          │
                          ┌─────────┐                     │
                          │   end   │◄────────────────────┘
                          └─────────┘
```

Fig. 5

Fig. 6

**REFERENCES CITED IN THE DESCRIPTION**

**Patent documents cited in the description**

- WO 2010105996 A

- EP 2383899 A

**Non-patent literature cited in the description**

- *HomePlug Alliance,* December 2005

- IEEE Standard for Broadband over Power Line Networks: Medium Access Control and Physical Layer Specifications. *IEEE Standard 1901-2010*